# EUROPEAN PATENT SPECIFICATION

(11) **EP 3 599 299 B1**
(45) Date of publication and mention of the grant of the patent: **10.01.2024**
(21) Application number: 19187914.7
(22) Date of filing: 23.07.2019
(51) Int. Cl.: D01H 1/22, D01H 13/14, H02P 8/12, H02P 8/14

(54) **DRAFTING DEVICE, SPINNING UNIT, AND SPINNING MACHINE**
STRECKVORRICHTUNG, SPINNEINHEIT UND SPINNMASCHINE
DISPOSITIF D'ÉTIRAGE, UNITÉ DE FILAGE ET MÉTIER À FILER

(30) Priority: 23.07.2018 JP 2018137491
(43) Date of publication of application: 29.01.2020
(73) Proprietor: Murata Machinery, Ltd., Kyoto-shi, Kyoto 601-8326 (JP)
(72) Inventor: MORI, Hideshige, Kyoto-shi, Kyoto, Kyoto 612-8686 (JP); SUSAMI, Hiroyuki, Kyoto-shi, Kyoto, Kyoto 612-8686 (JP)
(74) Representative: Stöckeler, Ferdinand

(56) References cited:
- EP-A1- 1 314 804
- EP-A1- 2 802 071
- EP-A2- 1 609 893
- DE-A1- 3 914 473
- DE-A1- 19 914 865
- US-A1- 2008 231 220
- Toshiba: "Motor Drivers", , 1 August 2017 (2017-08-01), XP055648760, Retrieved from the Internet: URL:https://toshiba.semicon-storage.com/ap -en/product/linear/motordriver/detail.TB67 S289FTG.html [retrieved on 2019-12-03]

## Description

### TECHNICAL FIELD

The present disclosure relates to a drafting device, a spinning unit, and a spinning machine.

### BACKGROUND

Conventionally, a drafting device is known, which includes a plurality of roller pairs configured to draft a fiber band, a plurality of stepping motors configured to drive the driving rollers of the roller pairs, and a control unit configured to control the operation of each stepping motor (for example, see Japanese Unexamined Patent Publication No. 2009-243006). EP280271 and US2008/231220 each refer to an image forming apparatus, while EP1314804 and EP1609893 each refer to a textile machinery.

### SUMMARY

In a device that allows a stepping motor to drive a driven target, such as a drafting device, the stepping motor is driven by drive current having a constant magnitude with a torque margin in order to prevent loss of synchronization of the stepping motor. This may reduce the drive efficiency of the stepping motor. To grasp the driving state, it is preferable to monitor the load torque acting on the stepping motor. However, it costs much to use an encoder or the like.

An aspect of the present disclosure aims to provide a drafting device, a spinning unit, and a spinning machine that can achieve improvement in drive efficiency and suppression of loss of synchronization of the stepping motor and can monitor the load torque of the stepping motor at low cost. The scope of protection of the present invention is defined by the appended claims.

A drafting device according to an aspect of the present disclosure includes a plurality of roller pairs configured to draft a fiber band, each of the roller pairs including a driving roller and a driven roller configured to rotate with rotation of the driving roller, a stepping motor configured to rotate the driving roller of at least one of the roller pairs, a motor driver configured to control operation of the stepping motor, and a monitoring unit configured to monitor load torque acting on the stepping motor. The motor driver includes: a load detector configured to detect a value corresponding to magnitude of the load torque acting on the stepping motor; an adjuster configured to adjust the magnitude of the drive current or drive voltage applied to the stepping motor, in accordance with the magnitude of the load torque detected by the load detector; a first output unit electrically connected to the stepping motor to output the drive current or drive voltage adjusted by the adjuster to the stepping motor; and a second output unit connected so as to be able to communicate with the monitoring unit to output an electrical signal concerning the drive current or drive voltage adjusted by the adjuster to the monitoring unit. The monitoring unit monitors the load torque based on the electrical signal output from the second output unit. The monitoring unit is configured to monitor the load torque based on the electrical signal output from the second output unit, wherein the monitoring unit is configured to determine that abnormality concerning the fiber band occurs when the magnitude of the load torque is equal to or smaller than a first threshold, and to determine that abnormality concerning the roller pairs occurs in a case where the magnitude of the load torque is smaller than a second threshold set based on the magnitude of the load torque at the time the fiber band is not drafted.

In this drafting device, the motor driver adjusts the magnitude of the drive current or drive voltage applied to the stepping motor, in accordance with the magnitude of the load torque acting on the stepping motor. This configuration can improve the drive efficiency of the stepping motor while suppressing loss of synchronization of the stepping motor. The motor driver is provided with the second output unit configured to output an electrical signal concerning the adjusted drive current or drive voltage to the monitoring unit, and the monitoring unit monitors the load torque of the stepping motor based on the electrical signal. This configuration enables monitoring of load torque of the stepping motor without using an encoder or the like. This drafting device therefore can achieve improvement in drive efficiency and suppression of loss of synchronization of the stepping motor and can monitor the load torque of the stepping motor at low cost.

A drafting device according to an aspect of the present disclosure includes a plurality of roller pairs configured to draft a fiber band, each of the roller pairs including a driving roller and a driven roller configured to rotate with rotation of the driving roller, a stepping motor configured to rotate the driving roller of at least one of the roller pairs, a motor driver configured to control operation of the stepping motor, a current/voltage detector configured to detect magnitude of drive current or drive voltage applied to the stepping motor, and a monitoring unit configured to monitor load torque acting on the stepping motor. The motor driver includes: a load detector configured to detect a value corresponding to magnitude of the load torque acting on the stepping motor; and an adjuster configured to adjust the magnitude of the drive current or drive voltage applied to the stepping motor, in accordance with the magnitude of the load torque detected by the load detector. The current/voltage detector detects the magnitude of the drive current or drive voltage adjusted by the adjuster. The monitoring unit monitors the load torque based on a detection result by the current/voltage detector. The monitoring unit is configured to determine that abnormality concerning the fiber band occurs when the magnitude of the load torque is equal to or smaller than a first threshold, and to determine that abnormality concerning the roller pairs occurs in a case where the magnitude of the load torque is smaller than a second threshold set based on the magnitude of the load torque at the time the fiber band is not drafted.

In this drafting device, the motor driver adjusts the magnitude of the drive current or drive voltage applied to the stepping motor, in accordance with the magnitude of the load torque acting on the stepping motor. This configuration can improve the drive efficiency of the stepping motor while suppressing loss of synchronization of the stepping motor. The magnitude of adjusted drive current or drive voltage is detected by the current/voltage detector, and the monitoring unit monitors the load torque of the stepping motor based on the detection result by the current/voltage detector. This configuration enables monitoring of load torque of the stepping motor without using an encoder or the like. This drafting device therefore can achieve improvement in drive efficiency and suppression of loss of synchronization of the stepping motor in the drafting device and can monitor the load torque of the stepping motor at low cost.

In the drafting device according to an aspect of the present disclosure, the monitoring unit determines whether at least one of abnormality concerning the roller pairs and abnormality concerning the fiber band occurs, based on the magnitude of the load torque. With this configuration, at least one of abnormality concerning the roller pairs and abnormality concerning the fiber band can be detected at low cost.

The drafting device according to an aspect of the present disclosure may further include a memory configured to store the magnitude of the load torque. The monitoring unit may determine whether at least one of abnormality concerning the roller pairs and abnormality concerning the fiber band occurs, based on the magnitude of the load torque stored in the memory during drafting of the fiber band, after the drafting is stopped. With this configuration, at least one of abnormality concerning the roller pairs and abnormality concerning the fiber band can be detected reliably.

In the drafting device according to an aspect of the present disclosure, the monitoring unit may determine whether at least one of abnormality concerning the roller pairs and abnormality concerning the fiber band occurs, based on the magnitude of the load torque, during drafting of the fiber band. In this configuration, at least one of abnormality concerning the roller pairs and abnormality concerning the fiber band can be detected in real time.

In the drafting device according to an aspect of the present disclosure, when the magnitude of the load torque is equal to or smaller than a first threshold, the monitoring unit determines that abnormality concerning the fiber band occurs. With this configuration, abnormality concerning the fiber band can be detected suitably. The first threshold, and the second threshold and the third threshold described below are set in advance preferably.

In the drafting device according to an aspect of the present disclosure, the first threshold may be set based on the magnitude of the load torque at the time the fiber band is drafted normally. With this configuration, abnormality concerning the fiber band can be detected considering variation of the magnitude of the load torque among the drafting devices.

The drafting device according to an aspect of the present disclosure may further include a receiving unit configured to receive setting of a drafting condition for the fiber band. The first threshold may be set based on the drafting condition received by the receiving unit. With this configuration, abnormality concerning the fiber band can be detected considering the drafting condition.

In the drafting device according to an aspect of the present disclosure, in a case where the magnitude of the load torque is smaller than a second threshold set based on the magnitude of the load torque at the time the fiber band is not drafted, the monitoring unit determines that abnormality concerning the roller pairs occurs. With this configuration, abnormality concerning the roller pairs can be detected suitably.

In the drafting device according to an aspect of the present disclosure, the roller pairs may include a back roller pair, a middle roller pair, and a front roller pair, in order from an upstream side in a traveling direction of the fiber band. The monitoring unit may monitor the load torque acting on the stepping motor configured to rotate the driving roller of the back roller pair. With this configuration, change in load torque during drafting of the fiber band can be monitored more suitably, and the fiber band can be drafted more stably.

In the drafting device according to an aspect of the present disclosure, the monitoring unit may be a control unit configured to control operation of the motor driver. With this configuration, the load torque of the stepping motor can be monitored by the control unit configured to control the operation of the motor driver.

In the drafting device according to an aspect of the present disclosure, the adjuster may adjust the magnitude of the drive current or drive voltage in a range in which rotational speed of the stepping motor is constant before and after adjustment.

A spinning unit according to an aspect of the present disclosure includes the drafting device described above, a spinning device configured to twist the fiber band to generate yarn, a winding device configured to wind the yarn to form a package, and a yarn monitoring device configured to monitor the yarn. This spinning unit can achieve improvement in drive efficiency and suppression of loss of synchronization of the stepping motor and can monitor the load torque of the stepping motor at low cost, for the reasons above.

In the spinning unit according to an aspect of the present disclosure, the drafting device may include a memory configured to store the magnitude of the load torque . When the yarn monitoring device detects abnormality in the yarn, the monitoring unit may determine whether at least one of abnormality concerning the roller pairs and abnormality concerning the fiber band occurs, based on the magnitude of the load torque stored in the memory during drafting of the fiber band, after the drafting is stopped. With this configuration, detection of abnormality by the yarn monitoring device can be a trigger to detect at least one of abnormality concerning the roller pairs and abnormality concerning the fiber band.

In the spinning unit according to an aspect of the present disclosure, when the magnitude of the load torque is equal to or smaller than a third threshold, the monitoring unit may determine that the fiber band is not supplied to the roller pairs. When the magnitude of the load torque is larger than the third threshold, the monitoring unit may determine that yarn breakage occurs in the yarn. With this configuration, abnormality in which the fiber band is not supplied to the roller pairs and abnormality in which yarn breakage occurs in the yarn can be detected distinguishably.

A spinning machine according to an aspect of the present disclosure includes a plurality of the spinning units described above. The roller pairs include a back roller pair, a middle roller pair, and a front roller pair, in order from an upstream side in a traveling direction of the fiber band. The stepping motor configured to rotate the driving roller of the back roller pair is disposed in each of the spinning units. With this configuration, change in load torque during drafting of the fiber band can be monitored suitably in each spinning unit without being affected by change produced in the other spinning units.

An aspect of the present disclosure provides a drafting device, a spinning unit, and a spinning machine that can achieve improvement in drive efficiency and suppression of loss of synchronization of the stepping motor and can monitor the load torque of the stepping motor at low cost.

### BRIEF DESCRIPTION OF THE DRAWINGS

FIG. 1 is a front view of a spinning machine according to an embodiment.
FIG. 2 is a schematic diagram illustrating a configuration of a drafting device.
FIG. 3A is a graph for explaining adjustment control of driving current by a motor driver.
FIG. 3B is a graph for explaining adjustment control of drive current by the motor driver.
FIG. 4 is a flowchart illustrating an example of the process executed by a control unit.
FIG. 5 is a flowchart illustrating another example of the process executed by the control unit.
FIG. 6 is a diagram illustrating the drafting device according to a modification.

### DETAILED DESCRIPTION

An embodiment of the present disclosure will be described in detail below with reference to the drawings. In the figures, the same or corresponding elements are denoted by the same reference signs and an overlapping description will be omitted.

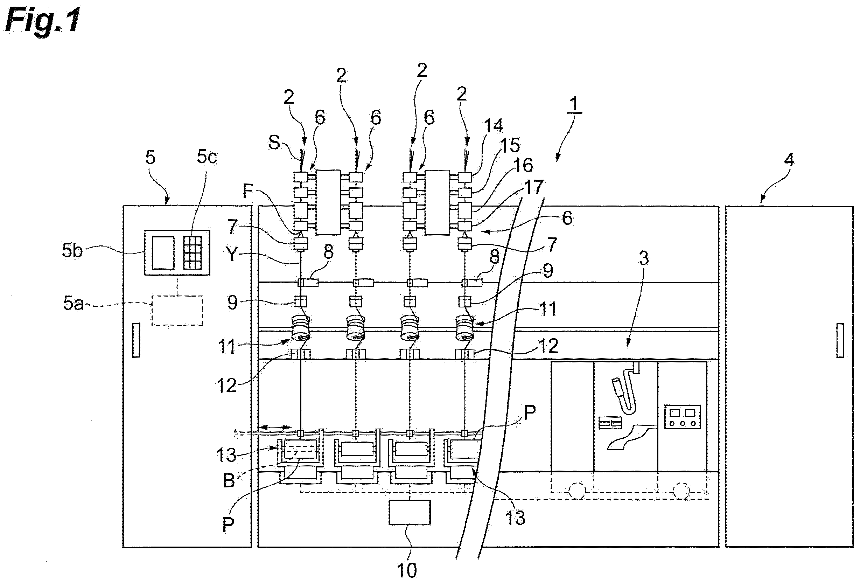

As illustrated in FIG. 1, a spinning machine 1 includes a plurality of spinning units 2, a yarn joining wagon 3, a doffing wagon (not illustrated), a first end frame 4, a second end frame 5, and a plurality of unit controllers 10. A plurality of spinning units 2 are arranged in a row. Each spinning unit 2 generates yarn Y and winds yarn Y into a package P. When yarn Y is cut in a spinning unit 2 or yarn Y is broken for some reason, the yarn joining wagon 3 performs a yarn joining operation in the spinning unit 2. When a package P becomes full in a spinning unit 2, the doffing wagon doffs the package P and supplies a new bobbin B to the spinning unit 2.

The first end frame 4 accommodates, for example, a recovery device that recovers fiber waste and yarn waste produced in the spinning units 2. The second end frame 5 accommodates, for example, an air supplier that adjusts the air pressure of compressed air (air) to be supplied to the spinning machine 1 and supplies the air to each part of the spinning machine 1, and a drive motor for supplying power to each part of the spinning units 2.

A machine control device 5a and a touch panel screen 5b are provided in the second end frame 5. The machine control device 5a centrally manages and controls each part of the spinning machine 1. The touch panel screen 5b can display, for example, information on at least one of the settings and the state of the spinning units 2 . The operator can make settings of the spinning units 2 by performing operation as appropriate using buttons 5c appearing on the touch panel screen 5b.

The unit controller 10 is provided for every predetermined numbers of spinning units 2. The unit controller 10 controls the operation of the spinning units 2. The unit controller 10 is configured with, for example, a computer including a central processing unit (CPU) and a read only memory (ROM). A program for controlling the spinning units 2 is stored in the ROM. The CPU executes the program stored in the ROM. The unit controller 10 is connected so as to be able to communicate with the machine control device 5a and controls the operation of each part of the spinning units 2 based on the operation condition input to the machine control device 5a.

Each spinning unit 2 includes a drafting device 6, an air spinning device 7, a yarn monitoring device 8, a tension sensor 9, a yarn storing device 11, a waxing device 12, and a winding device 13, in order from the upstream side in the travelling direction of yarn Y.

The drafting device 6 drafts a fiber band (sliver, handling target) F. The drafting device 6 has a back roller pair (first roller pair) 14, a third roller pair (back roller pair, second roller pair) 15, a middle roller pair 16, and a front roller pair 17, in order from the upstream side in the traveling direction of the fiber band F. The details of the drafting device 6 will be described later.

The air spinning device 7 twists the fiber band F drafted by the drafting device 6 with a vortex flow of air to generate yarn Y. Although not illustrated in the figure, the air spinning device 7 has a spinning chamber, a fiber guide, a vortex air flow generating nozzle, and a hollow guide shaft. The fiber guide guides a fiber band F supplied from the drafting device 6 upstream into the spinning chamber. The vortex air flow generating nozzle is disposed in the vicinity of a path through which the fiber band F travels. The air is injected from the vortex air flow generating nozzle to generate a vortex flow of air in the spinning chamber. This vortex flow of air turns the fiber ends of a plurality of fibers that form the fiber band F. The hollow guide shaft guides yarn Y from the inside of the spinning chamber to the outside of the air spinning device 7.

The yarn monitoring device 8 monitors the state of travelling yarn Y between the air spinning device 7 and the yarn storing device 11 and detects the presence/absence of a yarn defect (abnormality) based on the monitored information. The yarn monitoring device 8 detects, for example, at least one of thickness abnormality of yarn Y and a foreign matter contained in yarn Y as a yarn defect. The yarn monitoring device 8 further detects the presence/absence of yarn Y in a yarn path of yarn Y. The yarn monitoring device 8 transmits a signal indicating the detection result to the unit controller 10.

The tension sensor 9 measures the tension of travelling yarn Y between the air spinning device 7 and the yarn storing device 11 and transmits a tension measurement signal to the unit controller 10. If the unit controller 10 determines that there is abnormality based on at least one of the detection result by the yarn monitoring device 8 and the detection result by the tension sensor 9, yarn Y is cut in the spinning unit 2. Specifically, the air supply to the air spinning device 7 is stopped and generation of yarn Y is suspended, whereby yarn Y is cut. Alternatively, yarn Y may be cut by a cutter separately provided.

The yarn storing device 11 removes slack of yarn Y between the air spinning device 7 and the winding device 13. The yarn storing device 11 includes a yarn storing roller having an outer peripheral surface on which yarn Y is wound to store yarn Y, thereby removing slack of yarn Y. The yarn storing device 11 has the function of stably extruding yarn Y from the air spinning device 7, the function of storing yarn Y delivered from the air spinning device 7 in the yarn joining operation by the yarn joining wagon 3 to prevent slacking of yarn Y, and the function of preventing variation in tension of yarn Y downstream from the yarn storing device 11 from propagating to the air spinning device 7.

The waxing device 12 applies wax to yarn Y between the yarn storing device 11 and the winding device 13. The winding device 13 winds yarn Y around a bobbin B to form a package P. The winding device 13 has, for example, a cradle arm, a winding drum, and a traverse arm, and winds yarn Y traversing to form a package P.

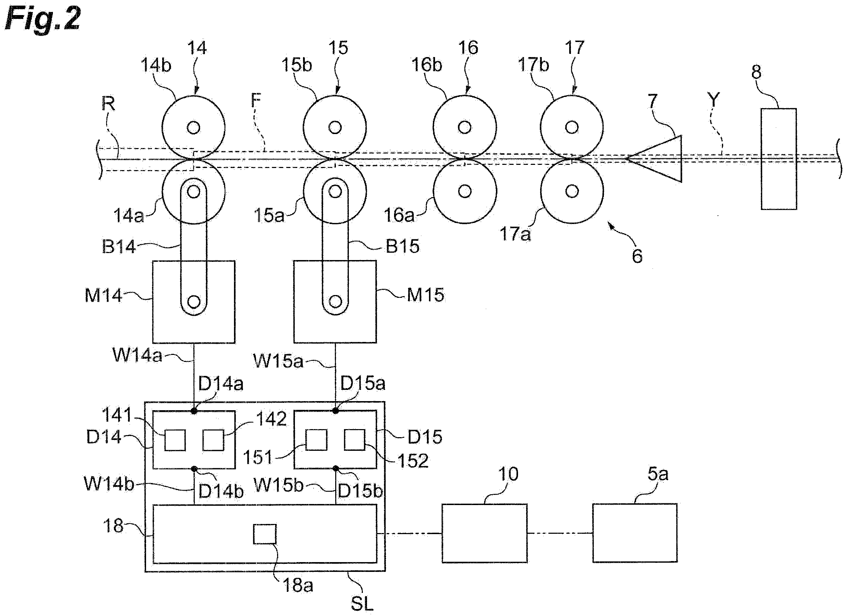

The detail of the drafting device 6 will now be described. As illustrated in FIG. 2, the back roller pair 14 has a back bottom roller (driven target) 14a and a back top roller 14b facing each other with a travel path R interposed to allow a fiber band F to travel. The third roller pair 15 has a third bottom roller (driven target) 15a and a third top roller 15b facing each other with the travel path R interposed. The middle roller pair 16 has a middle bottom roller 16a and a middle top roller 16b facing each other with the travel path R interposed. Each of the middle bottom roller 16a and the middle top roller 16b is provided with an apron belt (not illustrated) . The front roller pair 17 has a front bottom roller 17a and a front top roller 17b facing each other with the travel path R interposed. Each of the roller pairs 14, 15, 16, and 17 drafts and feeds the fiber band F supplied from a can (not illustrated) and guided by a fiber band guide from the upstream side to the downstream side.

The drafting device 6 further includes a stepping motor (first stepping motor) M14, a stepping motor (second stepping motor) M15, a motor driver D14, a motor driver D15, and a control unit (monitoring unit) 18. The stepping motor M14 rotates the back bottom roller 14a. A belt B14 is stretched between the rotation shaft of the stepping motor M14 and the rotation shaft of the back bottom roller 14a. The torque of the stepping motor M14 is transmitted to the back bottom roller 14a through the belt B14. The stepping motor M15 rotates the third bottom roller 15a. A belt B15 is stretched between the rotation shaft of the stepping motor M15 and the rotation shaft of the third bottom roller 15a. The torque of the stepping motor M15 is transmitted to the third bottom roller 15a through the belt B15.

The back bottom roller 14a is a driving roller configured to rotate with power from the stepping motor M14. The third bottom roller 15a is a driving roller configured to rotate with power from the stepping motor M15. The middle bottom roller 16a is a driving roller configured to rotate with power from a drive motor provided in the second end frame 5. The front bottom roller 17a is a driving roller configured to rotate with power from another drive motor provided in the second end frame 5. That is, the back bottom roller 14a and the third bottom roller 15a are driven (single (individual) spindle (unit) driven) for each spinning unit 2 and for each drafting device 6. The middle bottom roller 16a and the front bottom roller 17a are collectively driven (simultaneously driven) for a plurality of spinning units 2 and a plurality of drafting devices 6. The bottom rollers 14a, 15a, 16a, and 17a rotate at rotational speeds different from each other such that the rotational speed is higher on the downstream side. The top rollers 14b, 15b, 16b, and 17b are driven rollers in contact with the bottom rollers 14a, 15a, 16a, and 17a, respectively, to rotate with rotation of the bottom rollers 14a, 15a, 16a, and 17a. FIG. 2 schematically illustrates the fiber band F drafted by the roller pairs 14, 15, 16, and 17 by a broken line.

The motor driver D14 is electrically connected to the stepping motor M14 through wiring W14a and changes the magnitude of the drive current flowing through the wiring W14a to control the operation of the stepping motor M14. The motor driver D15 is electrically connected to the stepping motor M15 through wiring W15a and changes the magnitude of the drive current flowing through the wiring W15a to control the operation of the stepping motor M15.

The control unit 18 controls the operation of the stepping motors M14 and M15. The control unit 18 is provided, for example, on a slave board SL of the drafting device 6 to control the operation of the drafting device 6. The control unit 18 is configured with, for example, a computer (for example, microcomputer) including a central processing unit (CPU) and a read only memory (ROM). A program for controlling the drafting device 6 is stored in the ROM. The CPU executes the program stored in the ROM. The control unit 18 includes a memory 18a for storing the magnitude of the load torque described later. The control unit 18 is connected so as to be able to communicate with the unit controller 10 and controls the operation of the drafting device 6 while communicating with the unit controller 10. Although the motor drivers D14 and D15 are also provided on the slave board SL in the present embodiment, the arrangement of the control unit 18 and the motor drivers D14 and D15 is not limited to this example.

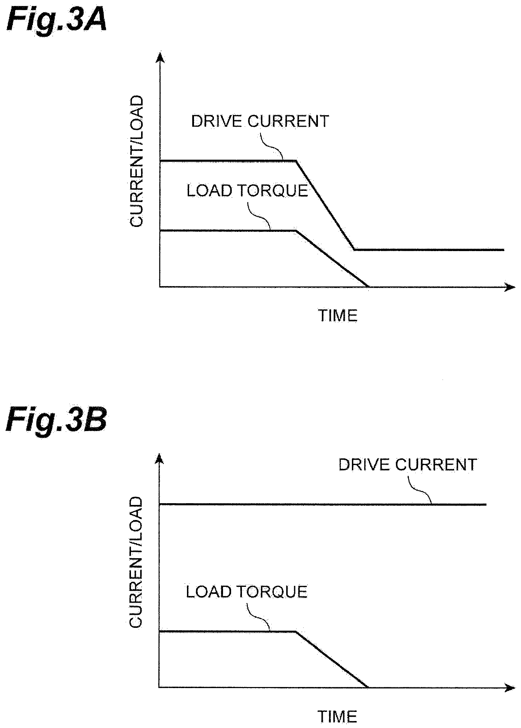

Referring to FIG. 3, the adjustment control of drive current by the motor drivers D14 and D15 is described. In a conventional technique, the stepping motor is driven by drive current having a constant magnitude with a torque margin in order to prevent loss of synchronization of the stepping motor. Thus, as illustrated in FIG. 3B, even when the load torque of the stepping motor decreases, the magnitude of the drive current does not change. The drive efficiency therefore may be reduced because drive current larger than necessary is applied in a time period in which the load torque is small.

The motor driver D14 in the present embodiment has the function of successively detecting the magnitude of the load torque acting on the stepping motor M14 and adjusting the magnitude of the drive current applied to the stepping motor M14 in accordance with the detected magnitude of the load torque. Thus, as illustrated in FIG. 3A, when the load torque of the stepping motor M14 decreases, the drive current applied to the stepping motor M14 is reduced while the torque margin is kept. When the load torque of the stepping motor M14 increases, the drive current applied to the stepping motor M14 is increased while the torque margin is kept. That is, the motor driver D14 automatically optimizes the drive current in real time, in accordance with the load torque acting on the stepping motor M14 in operation.

The drive current can be thus increased and decreased in accordance with the magnitude of the load torque of the stepping motor M14, so that the drive efficiency of the stepping motor M14 can be improved while loss of synchronization of the stepping motor M14 is suppressed. Similarly, the motor driver D15 has the function of successively detecting the magnitude of the load torque acting on the stepping motor M15 and adjusting the magnitude of the drive current applied to the stepping motor M15 in accordance with the detected magnitude of the load torque. For example, the technique described in the reference literature below can be used as such an adjustment method of drive current.
Reference Literature: Whitepaper [August, 2017]
https://toshiba.semicon-storage.com/jp/product/linear/motor driver/detail.TB67S289FTG.html

As illustrated in FIG. 2, the motor driver D14 has a load detector 141, an adjuster 142, a first output unit D14a, and a second output unit D14b. The load detector 141 detects a value corresponding to the magnitude of the load torque acting on the stepping motor M14. In the present embodiment, the load detector 141 detects the load torque itself acting on the stepping motor M14. The adjuster 142 adjusts the magnitude of the drive current applied to the stepping motor M14, in accordance with the magnitude of the load torque detected by the load detector 141. The adjuster 142 adjusts the magnitude of the drive current in a range in which the rotational speed of the stepping motor M14 is constant before and after adjustment (in other words, a range in which the rotational speed of the stepping motor M14 does not change).

The first output unit D14a is electrically connected to the stepping motor M14 through the wiring W14a and outputs the drive current adjusted by the adjuster 142 to the stepping motor M14. The second output unit D14b is electrically connected to the control unit 18 through the wiring W14b and outputs an electrical signal ES1 concerning the drive current adjusted by the adjuster 142 to the control unit 18. The first output unit D14a and the second output unit D14b are, for example, output terminals. The electrical signal ES1 is, for example, the adjusted drive current itself (analog signal) or may be an encoded digital signal. The control unit 18 calculates the magnitude of the load torque of the stepping motor M14 based on the received electrical signal ES1 and uses the calculated magnitude of the load torque for at least one of monitoring of the load torque and detection of abnormality in operation of the drafting device 6.

In this way, detection of the load torque and adjustment of the drive current are performed (completed) in the motor driver D14. The stepping motor M14 is controlled such that its rotational speed is constant. The load torque is monitored by the control unit 18 provided separately from the motor driver D14.

The motor driver D15 has a load detector 151, an adjuster 152, a first output unit D15a, and a second output unit D15b. The load detector 151 detects a value corresponding to the magnitude of the load torque acting on the stepping motor M15. In the present embodiment, the load detector 151 detects the load torque itself acting on the stepping motor M15. The adjuster 152 adjusts the magnitude of the drive current applied to the stepping motor M15, in accordance with the magnitude of the load torque detected by the load detector 151. The adjuster 152 adjusts the magnitude of the drive current in a range in which the rotational speed of the stepping motor M15 is constant before and after adjustment (in other words, a range in which the rotational speed of the stepping motor M15 does not change).

The first output unit D15a is electrically connected to the stepping motor M15 through wiring W15a and outputs the drive current adjusted by the adjuster 152 to the stepping motor M15. The second output unit D15b is electrically connected to the control unit 18 through wiring W15b and outputs an electrical signal ES2 concerning the drive current adjusted by the adjuster 152 to the control unit 18. The first output unit D15a and the second output unit D15b are, for example, output terminals. The electrical signal ES2 is an analog signal or may be a digital signal converted from the analog signal. The control unit 18 calculates the magnitude of the load torque of the stepping motor M15 based on the received electrical signal ES2 and uses the calculated magnitude of the load torque for at least one of monitoring of the load torque and detection of abnormality in operation of the drafting device 6.

In this way, detection of the load torque and adjustment of the drive current are performed (completed) in the motor driver D15. The stepping motor M15 is controlled such that its rotational speed is constant. The load torque is monitored by the control unit 18 provided separately from the motor driver D15.

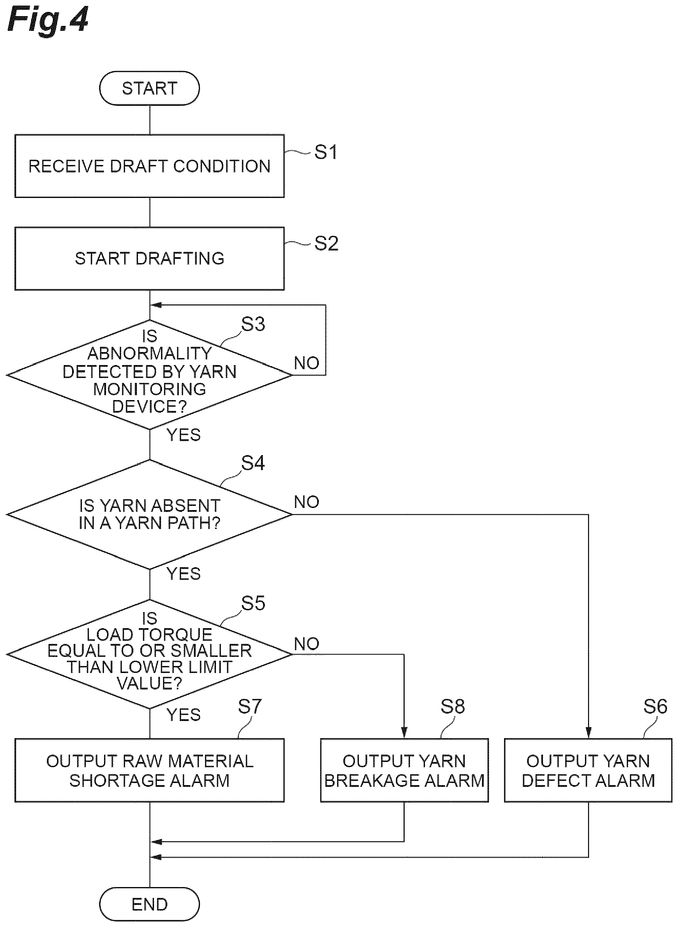

An example of the process executed by the control unit 18 will now be described with reference to the flowchart in FIG. 4. Although the control performed in one drafting device 6 (spinning unit 2) is described below, the control is performed similarly in the other drafting devices 6 (spinning units 2) . In short, the control unit 18 monitors the load torques acting on the stepping motors M14 and M15, based on the electrical signals ES1 and ES2, during drafting of a fiber band F by the drafting device 6. The control unit 18 executes a determination process for determining the cause of abnormality when abnormality is detected in yarn Y by the yarn monitoring device 8. At the start of the process illustrated in FIG. 4, the operation of the drafting device 6 (spinning unit 2) is suspended.

First of all, the control unit 18 receives the setting of a drafting condition for the fiber band F (step S1) . For example, the machine control device 5a receives the setting of a drafting condition for the fiber band F through the touch panel screen 5b. That is, in the present embodiment, the machine control device 5a (touch panel screen 5b) functions as a receiving unit configured to receive the setting of a drafting condition. In the present embodiment, the drafting device 6 is configured also with the machine control device 5a functioning as a receiving unit.

Upon receiving the setting of a drafting condition, the machine control device 5a instructs the control unit 18 to draft the fiber band F under the drafting condition, through the unit controller 10. The drafting condition includes, for example, at least one of the spinning speed, the drafting ratio, type of yarn, the thickness of the fiber band F, the draft gauge, and the width or the bore diameter of a guiding part of a fiber band guiding member (a trumpet or a condenser, for example) . The spinning speed is the speed at which the air spinning device 7 generates yarn Y. The total drafting ratio refers to the ratio of the amount of fibers or the number of fibers of the fiber band F after being processed by the front roller pair 17 to the amount of fibers or the number of fibers of the fiber band F before being introduced to the back roller pair 14.

The control unit 18 sets a lower limit value (first threshold, third threshold) L to be used in step S5 described later, based on the drafting condition received by the machine control device 5a. For example, the control unit 18 stores a table beforehand in which the lower limit value L and the drafting condition are associated with each other, and refers to the table to set the value associated with the received drafting condition as the lower limit value L.

Subsequently, the control unit 18 allows the drafting device 6 to start drafting the fiber band F (step S2). The control unit 18 controls each part of the drafting device 6 based on the drafting condition received by the machine control device 5a, during drafting of the fiber band F. The control unit 18 monitors the load torques acting on the stepping motors M14 and M15, based on the electrical signals ES1 and ES2, during drafting of the fiber band F. The control unit 18 successively calculates the load torques of the stepping motors M14 and M15 based on the electrical signals ES1 and ES2 and stores the calculated load torques as time-series information into the memory 18a, during drafting of the fiber band F.

Subsequently, the control unit 18 determines whether abnormality has been detected in yarn Y by the yarn monitoring device 8 (step S3). If it is determined that abnormality has been detected in yarn Y by the yarn monitoring device 8 (YES at step S3), the control unit 18 proceeds to step S4. If it is determined that abnormality has not been detected in yarn Y by the yarn monitoring device 8 (NO at step S3), the control unit 18 executes the process in step S3 again. As described above, when abnormality is detected in yarn Y by the yarn monitoring device 8, yarn Y is cut and the operation of the drafting device 6 (spinning unit 2) is suspended.

In step S4, the control unit 18 determines whether the yarn Y is absent in the yarn path. If it is determined that the yarn Y is absent in the yarn path (YES at step S4), the control unit 18 proceeds to step S5. If it is determined that the yarn Y is not absent in the yarn path (NO at step S4), the control unit 18 proceeds to step S6.

In step S5, the control unit 18 determines whether the magnitude of the load torque of the stepping motor M14 stored in the memory 18a during drafting immediately before the operation of the drafting device 6 is suspended is equal to or smaller than the lower limit value L. If it is determined that the magnitude of the load torque is equal to or smaller than the lower limit value L (YES at step S5), the control unit 18 proceeds to step S7. If it is determined that the magnitude of the load torque is larger than the lower limit value L (NO at step S5), the control unit 18 proceeds to step S8.

Abnormality is detected concerning yarn Y by the yarn monitoring device 8, for example, when a yarn defect occurs and when yarn Y is absent in a yarn path. In step S6, the control unit 18 determines that a yarn defect occurs and outputs a yarn defect alarm. The yarn defect alarm is a warning for notifying the operator that a yarn defect occurs and, for example, an image appearing on the touch panel screen 5b or warning sound output from a speaker.

Yarn Y is absent in a yarn path when fiber band F is not supplied to the roller pairs 14, 15, 16, and 17 for lack of raw material, and when yarn breakage occurs, that is, yarn Y is broken because of excessive tension applied to yarn Y. The conventional technique is unable to detect lack of raw material and yarn breakage distinguishably. By contrast, in the drafting device 6 in the present embodiment, lack of raw material and yarn breakage can be detected distinguishably using the magnitude of the load torque of the stepping motor M14.

More specifically, in the case of lack of raw material, the load torque of the stepping motor M14 decreases, whereas in the case of yarn breakage, the load torque of the stepping motor M14 does not decrease unlike lack of raw material of fiber band F. Lack of raw material and yarn breakage therefore can be detected distinguishably by determining whether the magnitude of the load torque is equal to or smaller than the lower limit value L.

Specifically, in step S7, the control unit 18 determines that lack of raw material occurs and outputs a raw material shortage alarm. The raw material shortage alarm is a warning for notifying the operator that raw material runs out and, for example, an image appearing on the touch panel screen 5b or warning sound output from a speaker. On the other hand, in step S8, the control unit 18 determines that yarn breakage occurs and outputs a yarn breakage alarm. The yarn breakage alarm is a warning for notifying the operator that yarn breakage occurs and, for example, an image appearing on the touch panel screen 5b or warning sound from a speaker.

As described above, in the drafting device 6, the motor driver D14 adjusts the magnitude of the drive current applied to the stepping motor M14, in accordance with the magnitude of the load torque acting on the stepping motor M14. This configuration can improve the drive efficiency of the stepping motor M14 while suppressing loss of synchronization of the stepping motor M14. Rotation irregularity of the stepping motor M14 also can be suppressed. In addition, the motor driver D14 is provided with the second output unit D14b configured to output an electrical signal ES1 concerning the adjusted drive current to the control unit 18, and the control unit 18 monitors the load torque of the stepping motor M14 based on the electrical signal ES1. This configuration enables monitoring of load torque of the stepping motor M14 without using an encoder or a CS sensor or the like. The drafting device 6 therefore can achieve improvement in drive efficiency and suppression of loss of synchronization of the stepping motor M14 and can monitor the load torque of the stepping motor M14 at low cost. In other words, the stepping motors M14 and M15 in the foregoing embodiment are not provided with a position sensor (rotation detecting sensor) for detecting a load torque.

In the drafting device 6, whether abnormality concerning the fiber band F occurs is determined based on the magnitude of the load torque of the stepping motor M14. This configuration enables detection of abnormality concerning the fiber band F at low cost.

In the drafting device 6, whether abnormality concerning the fiber band F occurs is determined based on the magnitude of the load torque stored in the memory 18a during drafting of the fiber band F, after the drafting is stopped. This configuration ensures detection of abnormality concerning the fiber band F.

In the drafting device 6, it is determined that abnormality concerning the fiber band F occurs when the magnitude of the load torque of the stepping motor M14 is equal to or smaller than the lower limit value L. This configuration enables suitable detection of abnormality concerning the fiber band F.

In the drafting device 6, the lower limit value L is set based on the drafting condition received by the machine control device 5a. This configuration enables detection of abnormality concerning the fiber band F considering the drafting condition.

In the drafting device 6, the load torques acting on the stepping motor M14 rotating the back bottom roller 14a and the stepping motor M15 rotating the third bottom roller 15a are monitored. With this configuration, change in load torque during drafting of the fiber band F can be monitored more suitably, and the fiber band F can be drafted more stably. More specifically, as drafting proceeds, the fiber band F gradually becomes thin and the force of drawing the fiber band F is smaller. Thus, the back bottom roller 14a on the most upstream side is a driving roller configured to draft the thickest fiber band F and having the lowest rotational speed. Accordingly, in view of the balance between mechanical load and drawing load, the drawing load of the back bottom roller 14a or the third bottom roller 15a is easily detected.

In the spinning unit 2, when the yarn monitoring device 8 detects abnormality in yarn Y, drafting of the fiber band F is stopped, and whether at least one of abnormality concerning the fiber band F occurs is determined based on the magnitude of the load torque stored in the memory 18a during the drafting. Detection of abnormality of yarn Y by the yarn monitoring device 8 can therefore be a trigger to detect abnormality concerning the fiber band F.

In the spinning unit 2, when the magnitude of the load torque of the stepping motor M14 is equal to or smaller than the lower limit value L, it is determined that the fiber band F is not supplied to the roller pairs 14, 15, 16, and 17 (lack of raw material) . When the magnitude of the load torque is larger than the lower limit value L, it is determined that yarn breakage occurs in yarn Y. This configuration enables detection of lack of raw material and yarn breakage in a distinguishable manner.

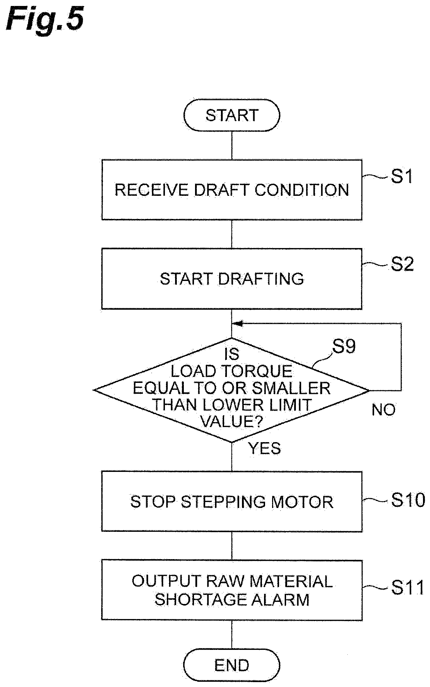

Although an embodiment of the present disclosure has been described above, the present disclosure is not limited to the foregoing embodiment. For example, the process illustrated in FIG. 5 may be executed by the control unit 18. In the process in FIG. 4, whether abnormality concerning the fiber band F occurs is determined after drafting of the fiber band F is stopped. However, in the process in FIG. 5, whether abnormality concerning the fiber band F occurs is determined during drafting of the fiber band F. Also in the process in FIG. 5, the control unit 18 monitors the load torques acting on the stepping motors M14 and M15, based on the electrical signals ES1 and ES2, during drafting of the fiber band F. In the process in FIG. 5, the control unit 18 successively calculates the load torques of the stepping motors M14 and M15 based on the electrical signals ES1 and ES2. However, the calculated load torques are not necessarily stored in the memory 18a.

In step S9 in FIG. 5, the control unit 18 determines whether the magnitude of the load torque of the stepping motor M14 at present is equal to or smaller than the lower limit value L. If it is determined that the magnitude of the load torque is equal to or smaller than the lower limit value L (YES at step S9), the control unit 18 proceeds to step S10. If it is determined that the magnitude of the load torque is larger than the lower limit value L (NO at step S9), the control unit 18 executes the process in step S9 again. In step S10, the control unit 18 stops the operation of the stepping motor M14 and suspends the operation of the drafting device 6 (spinning unit 2) . Subsequently, the control unit 18 determines that lack of raw material occurs and outputs a raw material shortage alarm (step S11).

Even in such a modification, improvement in drive efficiency and suppression of loss of synchronization of the stepping motor M14 can be achieved, and the load torque of the stepping motor M14 can be monitored at low cost, in the same manner as in the foregoing embodiment. Since whether abnormality concerning the fiber band F occurs is determined during drafting of the fiber band F, abnormality concerning the fiber band F can be detected in real time. In this modification, the spinning unit 2 does not necessarily include the yarn monitoring device 8.

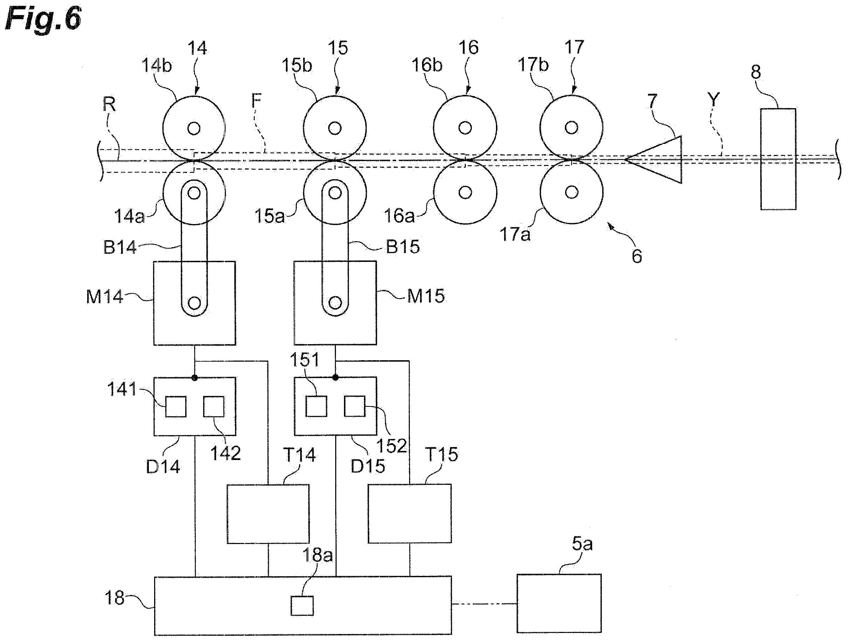

The drafting device 6 may be configured as in a modification illustrated in FIG. 6. In this modification, the drafting device 6 further includes a current detector T14 and a current detector T15. The current detector T14 detects the magnitude of the drive current applied from the motor driver D14 to the stepping motor M14. The current detector T14 is, for example, a current detector using a shunt resistor. The current detector T15 detects the magnitude of the drive current applied from the motor driver D15 to the stepping motor M15. The current detector T15 is, for example, a current detector using a shunt resistor.

The current detectors T14 and T15 are each electrically connected to the control unit 18 and output the detected magnitude of the drive current to the control unit 18. The control unit 18 calculates the magnitudes of load torques acting on the stepping motors M14 and M15 based on the detection results by the current detectors T14 and T15 and uses the calculated magnitudes of load torques for at least one of monitoring of load torque and detection of abnormality in operation of the drafting device 6. In this modification, the motor driver D14 does not necessarily include the second output unit D14b, and the motor driver D15 does not necessarily include the second output unitD15b. Even in such amodification, improvement in drive efficiency and suppression of loss of synchronization of the stepping motor M14 can be achieved, and the load torque of the stepping motor M14 can be monitored at low cost, in the same manner as in the foregoing embodiment.

In another modification, in step S5 in FIG. 4, in addition to or instead of the determination as to whether the magnitude of the load torque of the stepping motor M14 is equal to or smaller than the lower limit value L, whether the magnitude of the load torque of the stepping motor M15 is equal to or smaller than the lower limit value L may be determined. In this case, when both of the load torques of the stepping motors M14 and M15 are equal to or smaller than the lower limit value L, it may be determined that lack of raw material occurs. Alternatively, when one of the load torques of the stepping motor M14 and M15 is equal to or smaller than the lower limit value L, it may be determined that lack of raw material occurs. The lower limit value L compared with the magnitude of the load torque of the stepping motor M14 may be different from the lower limit value L compared with the magnitude of the load torque of the stepping motor M15. This is because the reduction ratio of the stepping motor M14 is different from the reduction ratio of the stepping motor M15. In the foregoing embodiment, only the load torque of the stepping motor M14 may be monitored, and monitoring of load torque of the stepping motor M15 may be omitted.

In the foregoing embodiment, the lower limit value L is set in accordance with the drafting condition received by the machine control device 5a. In this case, the same lower limit value L is set for each drafting device 6. As a modification, the lower limit value L may be set based on the magnitude of the load torque of the stepping motor M14 at the time the fiber band F is drafted normally. For example, in each drafting device 6, the load torque of the stepping motor M14 at the time the fiber band F is drafted normally may be stored in the memory, and the lower limit value L may be set in accordance with the magnitude of the load torque stored in the memory (for example, to a value obtained by multiplying the load torque by a predetermined coefficient). In such a modification, abnormality concerning the fiber band F can be detected considering variation of the magnitude of the load torque of the stepping motor M14 among the drafting devices 6.

In the foregoing embodiment, in addition to or instead of the determination process above, the control unit 18 may determine that abnormality concerning the roller pairs 14, 15, 16, and 17 occurs if the magnitude of the load torque of the stepping motor M14 is smaller than a second threshold set based on the magnitude of the load torque at the time the fiber band F is not drafted. As used herein, "when the fiber band F is not drafted" refers to, for example, when the drafting force (spinning load) does not act on the stepping motor M14, for example, in warm-up operation. In this case, only mechanical load acts on the stepping motor M14. Accordingly, when abnormality concerning the roller pairs 14, 15, 16, and 17 occurs, that is, when mechanical abnormality occurs, for example, when the belt B14 is broken, the load torque of the stepping motor M14 is smaller than the second threshold. In this modification, for example, in each drafting device 6, the load torque of the stepping motor M14 at the time the fiber band F is not drafted is stored in the memory, and a second threshold is set in accordance with the magnitude of the load torque stored in the memory (for example, to a value obtained by multiplying the load torque by a predetermined coefficient). According to this modification, abnormality concerning the roller pairs 14, 15, 16, and 17 can be detected suitably.

In the foregoing embodiment, the process in FIG. 4 may be executed by the unit controller 10, instead of the control unit 18. More specifically, the monitoring unit may be constituted by the unit controller 10 to monitor the load torques of the stepping motors M14 and M15. Alternatively, the monitoring unit may be constituted by the machine control device 5a to monitor the load torques of the stepping motors M14 and M15. In these cases, the drafting device 6 may be considered as being constituted by the unit controller 10 or the machine control device 5a that constitutes the monitoring unit. Alternatively, the load torques of the stepping motors M14 and M15 may be monitored with any other configuration. For example, the drafting device 6 may include a monitoring unit for monitoring the load torques of the stepping motors M14 and M15, separately from the control unit for controlling the operation of the motor drivers D14 and D15. This monitoring unit may be constituted by, for example, a computer such as microcomputer. The second output unit D14b may be connected directly to the monitoring unit or may be connected indirectly to the monitoring unit through any other elements.

In the foregoing embodiment, the machine control device 5a functions as a receiving unit configured to receive the setting of a drafting condition. However, a configuration other than the machine control device 5a may receive the setting of a drafting condition. The receiving unit may be a keyboard or a push button. When the spinning machine 1 is configured to be able to communicate with a portable terminal or other external devices, the receiving unit may receive input information from an external device as the setting of a drafting condition.

In the foregoing embodiment, the monitoring unit may function as a setting unit for setting the rotational speed (target rotational speed) of the stepping motor M14. More specifically, the monitoring unit may give an instruction of rotational speed to the motor driver D14. In this case, the monitoring unit may be an element that relays an instruction given from a higher-level controller. For example, the machine control device 5a receives the setting of a drafting condition, determines the target rotational speed (constant value) of the stepping motor M14 that satisfies the setting, and sends the determined speed to the unit controller 10. The unit controller 10 sends an instruction corresponding to the target rotational speed to the motor driver D14. The motor driver D14 adjusts drive current in accordance with the load torque such that the constant target rotational speed is attained. Similarly, the monitoring unit may function as a setting unit for setting the rotational speed (target rotational speed) of the stepping motor M15.

In the foregoing embodiment, the second output unit D14b is connected so as to be able to communicate with the control unit 18 by wire or by radio and, for example, may be a transmitting unit for transmitting the electrical signal ES1 to the control unit 18 by radio. The second output unit D14b may be connected directly to the control unit 18 or may be connected indirectly to the control unit 18 through any other elements. The motor driver D14 may adjust the magnitude of the drive voltage applied to the stepping motor M14, in accordance with the magnitude of the load torque acting on the stepping motor M14. In this case, the second output unit D14b outputs the electrical signal ES1 concerning the adjusted drive voltage to the control unit 18. Also in this case, the control unit 18 can monitor the load torque of the stepping motor M14 based on the electrical signal ES1. These points are similar for the motor driver D15 and the second output unit D15b. The drafting device 6 in the foregoing modification may include a voltage detector configured to detect the magnitude of the drive voltage applied to the stepping motor M14 from the motor driver D14, instead of the current detector T14. The drafting device 6 in the foregoing modification may include a voltage detector configured to detect the magnitude of the drive voltage applied from the motor driver D15 to the stepping motor M15, instead of the current detector T15.

In the foregoing embodiment, the load detector 141 of the motor driver D14 may be considered as a load reflecting unit. More specifically, the motor driver may include a load reflecting unit configured to reflect the magnitude of the load torque acting on the stepping motor, and the adjuster may be configured to adjust the magnitude of the drive current or drive voltage applied to the stepping motor, in accordance with the magnitude of the load torque reflected by the load reflecting unit.

The similar process as in the foregoing embodiment may be performed in a configuration in which the stepping motor M15 is omitted and the stepping motor M14 rotates the back bottom roller 14a and the third bottom roller 15a. Also in this case, improvement in drive efficiency and suppression of loss of synchronization of the stepping motor M14 can be achieved, and the load torque of the stepping motor M14 can be monitored at low cost, in the same manner as in the foregoing embodiment.

In the foregoing embodiment, the front bottom roller 17a and the middle bottom roller 16a are driven by the drive motors provided in the second end frame 5. However, a stepping motor that drives at least one of the front bottom roller 17a and the middle bottom roller 16a may be provided in each drafting device 6. In this case, the load torque of the stepping motor may be monitored, in the same manner as the stepping motors M14 and M15.

In the foregoing embodiment, the air spinning device 7 twists the fiber band F with a vortex flow of air to generate yarn Y. However, yarn Y may be generated by a pair of air jet nozzles configured to twist the fiber band in directions opposite to each other. In the foregoing embodiment, the yarn storing device 11 draws yarn Y from the air spinning device 7. However, yarn Y may be drawn from the air spinning device 7 by a delivery roller and a nip roller. When yarn Y is drawn from the air spinning device 7 by a delivery roller and a nip roller, for example, a slack tube or a mechanical compensator for absorbing the slack of yarn Y with a suction air flow may be provided, instead of the yarn storing device 11.

## Claims

1. A drafting device (6) for textile machinery comprising:
a plurality of roller pairs (14, 15, 16, 17) configured to draft a fiber band (F), each of the roller pairs (14, 15, 16, 17) including a driving roller (14a, 15a, 16a, 17a) and a driven roller (14b, 15b, 16b, 17b) configured to rotate with rotation of the driving roller (14a, 15a, 16a, 17a), and
a load monitoring system comprising:
a motor (M14, M15) configured to rotate the driving roller (14a, 15a) of at least one of the roller pairs (14, 15, 16, 17);
a motor driver (D14, D15) configured to control operation of the motor (M14, M15); and
a monitoring unit (18) configured to monitor a load torque acting on the motor (M14, M15), wherein
the motor driver (D14, D15) includes:
a load detector (141, 151) configured to detect a value corresponding to the magnitude of the load torque acting on the motor (M14, M15);
an adjuster (142, 152) configured to adjust the magnitude of a drive current or a drive voltage applied to the motor (M14, M15), in accordance with the magnitude of the load torque detected by the load detector (141, 151);
a first output unit (D14a, D15a) electrically connected to the motor (M14, M15) to output the drive current or drive voltage adjusted by the adjuster (142, 152) to the motor (M14, M15); and
a second output unit (D14b, D15b) connected so as to be able to communicate with the monitoring unit (18) to output an electrical signal concerning the drive current or drive voltage adjusted by the adjuster (142, 152) to the monitoring unit (18), wherein
the monitoring unit (18) is configured to monitor the load torque based on the electrical signal output from the second output unit (D14b, D15b), **characterized in that** the motor (M14, M15) is a stepping motor (M14, M15) and **in that**
the monitoring unit (18) is configured to determine that abnormality concerning the fiber band (F) occurs when the magnitude of the load torque is equal to or smaller than a first threshold, and to determine that abnormality concerning the roller pairs (14, 15, 16, 17) occurs in a case where the magnitude of the load torque is smaller than a second threshold set based on the magnitude of the load torque at the time the fiber (F) band is not drafted.

2. A drafting device (6) for textile machinery comprising:
a plurality of roller pairs (14, 15, 16, 17) configured to draft a fiber band (F), each of the roller pairs (14, 15, 16, 17) including a driving roller (14a, 15a, 16a, 17a) and a driven roller (14b, 15b, 16b, 17b) configured to rotate with rotation of the driving roller (14a, 15a, 16a, 17a), and
a load monitoring system comprising:
a motor (M14, M15) configured to rotate the driving roller (14a, 15a) of at least one of the roller pairs (14, 15, 16, 17)
a motor driver (D14, D15) configured to control operation of the motor (M14, M15),
a current/voltage detector (T14, T15) configured to detect magnitude of drive current or drive voltage applied to the motor (M14, M15), and
a monitoring unit (18) configured to monitor load torque acting on the motor (M14, M15), wherein
the motor driver (D14, D15) includes:
a load detector (141, 151) configured to detect a value corresponding to magnitude of the load torque acting on the motor (M14, M15); and
an adjuster (142, 152) configured to adjust the magnitude of the drive current or drive voltage applied to the motor (M14, M15), in accordance with the magnitude of the load torque detected by the load detector (141, 151),
the current/voltage detector (T14, T15) is configured to detect the magnitude of the drive current or drive voltage adjusted by the adjuster (142, 152), wherein
the monitoring unit (18) is configured to monitor the load torque based on a detection result by the current/voltage detector (T14, T15), **characterized in that** the motor (M14, M15) is a stepping motor (M14, M15) and **in that**
the monitoring unit (18) is configured to determine that abnormality concerning the fiber band (F) occurs when the magnitude of the load torque is equal to or smaller than a first threshold, and to determine that abnormality concerning the roller pairs (14, 15, 16, 17) occurs in a case where the magnitude of the load torque is smaller than a second threshold set based on the magnitude of the load torque at the time the fiber (F) band is not drafted.

3. The drafting device (6) for textile machinery according to claim 1 or 2, further comprising a memory (18a) configured to store the magnitude of the load torque, wherein
the monitoring unit (18) is configured to determine whether at least one of abnormality concerning the roller pairs (14, 15, 16, 17) and abnormality concerning the fiber band (F) occurs, based on the magnitude of the load torque stored in the memory (18a) during drafting of the fiber band (F), after the drafting is stopped.

4. The drafting device (6) for textile machinery according to claim 1 or 2, wherein the monitoring unit (18) is configured to determine whether at least one of abnormality concerning the roller pairs (14, 15, 16, 17) and abnormality concerning the fiber band (F) occurs, based on the magnitude of the load torque, during drafting of the fiber band (F).

5. The drafting device (6) for textile machinery according to claim 1 or 2, wherein the first threshold is set based on the magnitude of the load torque at the time the fiber band (F) is drafted normally.

6. The drafting device (6) for textile machinery according to claim 1 or 2 further comprising a receiving unit (5a) configured to receive setting of a drafting condition for the fiber band (F), wherein
the first threshold is set based on the drafting condition received by the receiving unit (5a).

7. The drafting device (6) for textile machinery according to any one of claims 1 to 6, wherein the monitoring unit (18) is a control unit configured to control operation of the motor driver (D14, D15).

8. The drafting device (6) for textile machinery according to any one of claims 1 to 7, wherein the adjuster (142, 152) is configured to adjust the magnitude of the drive current or drive voltage in a range in which rotational speed of the stepping motor (M14, M15) is constant before and after adjustment.

9. A spinning unit (2) comprising:
the drafting device (6) according to any one of claims 1 to 8,
a spinning device (7) configured to twist the fiber band (F) to generate yarn (Y),
a winding device (13) configured to wind the yarn (Y) to form a package (P), and
a yarn monitoring device (8) configured to monitor the yarn (Y) .

10. The spinning unit (2) according to claim 9, wherein
the drafting device (6) includes a memory (18a) configured to store the magnitude of the load torque, and
when the yarn monitoring device (8) detects abnormality in the yarn (Y), the monitoring unit (18) is configured to determine whether at least one of abnormality concerning the roller pairs (14, 15, 16, 17) and abnormality concerning the fiber band (F) occurs, based on the magnitude of the load torque stored in the memory (18a) during drafting of the fiber band (F), after the drafting is stopped.

11. The spinning unit (2) according to claim 10, wherein
the monitoring unit (18) is configured to determine that the fiber band (F) is not supplied to the roller pairs (14, 15, 16, 17) when the magnitude of the load torque is equal to or smaller than a third threshold, and
the monitoring unit (18) may be configured to determine that yarn breakage occurs in the yarn (Y) when the magnitude of the load torque is larger than the third threshold.

12. A spinning machine comprising a plurality of the spinning units (2) according to any one of claims 9 to 11, wherein
the roller pairs (14, 15, 16, 17) include a back roller pair 14, 15), a middle roller pair (16), and a front roller pair (17), in order from an upstream side in a traveling direction of the fiber band (F), and
the stepping motor (M14, M15) configured to rotate the driving roller (14a, 15a) of the back roller pair (14, 15) is disposed in each of the spinning units (2).

## Patentansprüche

1. Eine Streckvorrichtung (6) für Textilmaschinen, die folgende Merkmale aufweist:
eine Mehrzahl von Rollenpaaren (14, 15, 16, 17), die konfiguriert sind, ein Faserband (F) zu strecken, wobei jedes der Rollenpaare (14, 15, 16, 17) eine Antriebsrolle (14a, 15a, 16a, 17a) und eine angetriebene Rolle (14b, 15b, 16b, 17b) umfasst, die konfiguriert ist, sich mit der Drehung der Antriebsrolle (14a, 15a, 16a, 17a) zu drehen und
ein Lastüberwachungssystem, das folgende Merkmale aufweist:
einen Motor (M14, M15), der konfiguriert ist, die Antriebsrolle (14a, 15a) von zumindest einem der Rollenpaare (14, 15, 16, 17) zu drehen;
einen Motortreiber (D14, D15), der konfiguriert ist, einen Betrieb des Motors (M14, M15) zu steuern; und
eine Überwachungseinheit (18), die konfiguriert ist, ein Lastmoment zu überwachen, das auf den Motor (M14, M15) wirkt, wobei
der Motortreiber (D14, D15) folgende Merkmale umfasst:
einen Lastdetektor (141, 151), der konfiguriert ist, einen Wert zu erfassen, der dem Betrag des Lastmoments entspricht, das auf den Motor (M14, M15) wirkt;
einen Einsteller (142, 152), der konfiguriert ist, den Betrag eines Antriebsstroms oder einer Antriebsspannung, der/die an den Motor (M14, M15) angelegt ist, gemäß dem Betrag des Lastmoments einzustellen, das durch den Lastdetektor (141, 151) erfasst wird;
eine erste Ausgabeeinheit (D14a, D15a), die mit dem Motor (M14, M15) elektrisch verbunden ist, um den Antriebsstrom oder die Antriebsspannung, der/die durch den Einsteller (142, 152) eingestellt wird, an den Motor (M14, M15) auszugeben; und
eine zweite Ausgabeeinheit (D14b, D15b), die verbunden ist, um mit der Überwachungseinheit (18) kommunizieren zu können, um ein elektrisches Signal, das den Antriebsstrom oder die Antriebsspannung betrifft, der/die durch den Einsteller (142, 152) eingestellt wird, an die Überwachungseinheit (18) auszugeben, wobei
die Überwachungseinheit (18) konfiguriert ist, das Lastmoment basierend auf dem elektrischen Signal zu überwachen, das von der zweiten Ausgabeeinheit (D14b, D15b) ausgegeben wird,
**dadurch gekennzeichnet, dass** der Motor (M14, M15) ein Schrittmotor (M14, M15) ist, und dass die Überwachungseinheit (18) konfiguriert ist, zu bestimmen, dass eine Anormalität bezüglich des Faserbands (F) auftritt, wenn der Betrag des Lastmoments gleich wie oder kleiner als ein erster Schwellenwert ist, und zu bestimmen, dass eine Anormalität bezüglich der Rollenpaare (14, 15, 16, 17) auftritt, in einem Fall, bei dem der Betrag des Lastmoments kleiner ist als ein zweiter Schwellenwert, der basierend auf dem Betrag des Lastmoments zu dem Zeitpunkt eingestellt wird, zu dem das Faserband (F) nicht gestreckt ist.

2. Eine Streckvorrichtung (6) für Textilmaschinen, die folgende Merkmale aufweist:
eine Mehrzahl von Rollenpaaren (14, 15, 16, 17), die konfiguriert sind, ein Faserband (F) zu strecken, wobei jedes der Rollenpaare (14, 15, 16, 17) eine Antriebsrolle (14a, 15a, 16a, 17a) und eine angetriebene Rolle (14b, 15b, 16b, 17b) umfasst, die konfiguriert ist, sich mit der Drehung der Antriebsrolle (14a, 15a, 16a, 17a) zu drehen und
ein Lastüberwachungssystem, das folgende Merkmale aufweist:
einen Motor (M14, M15), der konfiguriert ist, die Antriebsrolle (14a, 15a) von zumindest einem der Rollenpaare (14, 15, 16, 17) zu drehen;
einen Motortreiber (D14, D15), der konfiguriert ist, einen Betrieb des Motors (M14, M15) zu steuern,
einen Strom/Spannungsdetektor (T14, T15), der konfiguriert ist, einen Betrag eines Antriebsstroms oder einer Antriebsspannung zu erfassen, der/die an den Motor (M14, M15) angelegt ist, und
eine Überwachungseinheit (18), die konfiguriert ist, ein Lastmoment zu überwachen, das auf den Motor (M14, M15) wirkt, wobei
der Motortreiber (D14, D15) folgende Merkmale umfasst:
einen Lastdetektor (141, 151), der konfiguriert ist, einen Wert zu erfassen, der dem Betrag des Lastmoments entspricht, das auf den Motor (M14, M15) wirkt;
einen Einsteller (142, 152), der konfiguriert ist, den Betrag des Antriebsstroms oder der Antriebsspannung, der/die an den Motor (M14, M15) angelegt ist, gemäß dem Betrag des Lastmoments einzustellen, das durch den Lastdetektor (141, 151) erfasst wird;
der Strom/Spannungsdetektor (T14, T15) konfiguriert ist, den Betrag des Antriebsstroms oder der Antriebsspannung zu erfassen, der/die durch den Einsteller (142, 152) eingestellt ist, wobei
die Überwachungseinheit (18) konfiguriert ist, das Lastmoment basierend auf einem Erfassungsergebnis durch den Strom/Spannungsdetektor (T14, T15) zu überwachen,
**dadurch gekennzeichnet, dass** der Motor (M14, M15) ein Schrittmotor (M14, M15) ist, und dass die Überwachungseinheit (18) konfiguriert ist, zu bestimmen, dass eine Anormalität bezüglich des Faserbands (F) auftritt, wenn der Betrag des Lastmoments gleich wie oder kleiner als ein erster Schwellenwert ist, und zu bestimmen, dass eine Anormalität bezüglich der Rollenpaare (14, 15, 16, 17) auftritt, in einem Fall, bei dem der Betrag des Lastmoments kleiner ist als ein zweiter Schwellenwert, der basierend auf dem Betrag des Lastmoments zu dem Zeitpunkt eingestellt wird, zu dem das Faserband (F) nicht gestreckt ist.

3. Die Streckvorrichtung (6) für Textilmaschinen gemäß Anspruch 1 oder 2, die ferner einen Speicher (18a) aufweist, der konfiguriert ist, den Betrag des Lastmoments zu speichern, wobei
die Überwachungseinheit (18) konfiguriert ist, basierend auf dem Betrag des Lastmoments, das während des Streckens des Faserbands (F) in dem Speicher (18a) gespeichert wird, zu bestimmen, ob zumindest eine einer Anormalität bezüglich der Rollenpaare (14, 15, 16, 17) und einer Anormalität bezüglich des Faserbands (F) auftritt, nachdem das Strecken angehalten wird.

4. Die Streckvorrichtung (6) für Textilmaschinen gemäß Anspruch 1 oder 2, bei der die Überwachungseinheit (18) konfiguriert ist, basierend auf dem Betrag des Lastmoments zu bestimmen, ob zumindest eine einer Anormalität bezüglich der Rollenpaare (14, 15, 16, 17) und einer Anormalität bezüglich des Faserbands (F) auftritt, während des Streckens des Faserbands (F).

5. Die Streckvorrichtung (6) für Textilmaschinen gemäß Anspruch 1 oder 2, bei der der erste Schwellenwert basierend auf dem Betrag des Lastmoments zu dem Zeitpunkt eingestellt wird, zu dem das Faserband (F) normal gestreckt ist.

6. Die Streckvorrichtung (6) für Textilmaschinen gemäß Anspruch 1 oder 2, die ferner eine Empfangseinheit (5a) aufweist, die konfiguriert ist, eine Einstellung einer Streckbedingung für das Faserband (F) zu empfangen, wobei
der erste Schwellenwert basierend auf der Streckbedingung eingestellt wird, die durch die Empfangseinheit (5a) empfangen wird.

7. Die Streckvorrichtung (6) für Textilmaschinen gemäß einem der Ansprüche 1 bis 6, bei der die Überwachungseinheit (18) eine Steuereinheit ist, die konfiguriert ist, einen Betrieb des Motortreibers (D14, D15) zu steuern.

8. Die Streckvorrichtung (6) für Textilmaschinen gemäß einem der Ansprüche 1 bis 7, bei der der Einsteller (142, 152) konfiguriert ist, den Betrag des Antriebsstroms oder der Antriebsspannung in einem Bereich einzustellen, in dem eine Drehgeschwindigkeit des Schrittmotors (M14, M15) vor und nach der Einstellung konstant ist.

9. Eine Spinneinheit (2), die folgende Merkmale aufweist:
die Streckvorrichtung (6) gemäß einem der Ansprüche 1 bis 8,
eine Spinnvorrichtung (7), die konfiguriert ist, das Faserband (F) zu verdrillen, um Garn (Y) zu erzeugen,
eine Wicklungsvorrichtung (13), die konfiguriert ist, das Garn (Y) zu wickeln, um einen Wickelkörper (P) zu bilden und
eine Garnüberwachungsvorrichtung (8), die konfiguriert ist, das Garn (Y) zu überwachen.

10. Die Spinneinheit (2) gemäß Anspruch 9, bei der
die Streckvorrichtung (6) einen Speicher (18a) umfasst, der konfiguriert ist, den Betrag des Lastmoments zu speichern und
wenn die Garnüberwachungsvorrichtung (8) eine Anormalität in dem Garn (Y) erfasst, die Überwachungseinheit (18) konfiguriert ist, basierend auf dem Betrag des Lastmoments, das während des Streckens des Faserbands (F) in dem Speicher (18a) gespeichert wird, zu bestimmen, ob zumindest eine einer Anormalität bezüglich der Rollenpaare (14, 15, 16, 17) und einer Anormalität bezüglich des Faserbands (F) auftritt, nachdem das Strecken angehalten wird.

11. Die Spinneinheit (2) gemäß Anspruch 10, bei der
die Überwachungseinheit (18) konfiguriert ist, zu bestimmen, dass das Faserband (F) den Rollenpaaren (14, 15, 16, 17) nicht zugeführt wird, wenn der Betrag des Lastmoments gleich wie oder kleiner als ein dritter Schwellenwert ist und
die Überwachungseinheit (18) konfiguriert sein kann, zu bestimmen, dass in dem Garn (Y) ein Garnbruch auftritt, wenn der Betrag des Lastmoments größer ist als der dritte Schwellenwert.

12. Eine Spinnmaschine, die eine Mehrzahl der Spinneinheiten (2) gemäß einem der Ansprüche 9 bis 11 aufweist, wobei
die Rollenpaare (14, 15, 16, 17) ein hinteres Rollenpaar (14, 15), ein mittleres Rollenpaar (16) und ein vorderes Rollenpaar (17) aufweisen, in dieser Reihenfolge von einer stromaufwärtigen Seite in einer Bewegungsrichtung des Faserbands (F) und
der Schrittmotor (M14, M15), der konfiguriert ist, die Antriebsrolle (14a, 15a) des hinteren Rollenpaars (14, 15) zu drehen, in jeder der Spinneinheiten (2) angeordnet ist.

## Revendications

1. Dispositif d'étirage (6) pour machines textiles, comprenant:
une pluralité de paires de rouleaux (14, 15, 16, 17) configurées pour étirer une bande de fibres (F), chacune des paires de rouleaux (14, 15, 16, 17) comportant un rouleau d'entraînement (14a, 15a, 16a, 17a) et un rouleau entraîné (14b, 15b, 16b, 17b) configuré pour tourner avec la rotation du rouleau d'entraînement (14a, 15a, 16a, 17a), et un système de surveillance de charge comprenant:
un moteur (M14, M15) configuré pour faire tourner le rouleau d'entraînement (14a, 15a) d'au moins l'une des paires de rouleaux (14, 15, 16, 17);
un pilote de moteur (D14, D15) configuré pour commander le fonctionnement du moteur (M14, M15); et
une unité de surveillance (18) configurée pour surveiller un couple de charge agissant sur le moteur (M14, M15),
dans lequel
le pilote de moteur (D14, D15) comporte:
un détecteur de charge (141, 151) configuré pour détecter une valeur correspondant à l'amplitude du couple de charge agissant sur le moteur (M14, M15);
un moyen de réglage (142, 152) configuré pour ajuster l'amplitude d'un courant d'entraînement ou d'une tension d'entraînement appliquée au moteur (M14, M15), selon l'amplitude du couple de charge détecté par le détecteur de charge (141, 151);
une première unité de sortie (D14a, D15a) connectée électriquement au moteur (M14, M15) destinée à sortir le courant de commande ou la tension de commande réglée par le moyen de réglage (142, 152) vers le moteur (M14, M15); et
une deuxième unité de sortie (D14b, D15b) connectée de manière à pouvoir communiquer avec l'unité de surveillance (18) pour sortir un signal électrique relatif au courant de commande ou à la tension de commande ajustée par le moyen de réglage (142, 152) vers l'unité de surveillance (18),
dans lequel
l'unité de surveillance (18) est configurée pour surveiller le couple de charge sur base du signal électrique sorti par la deuxième unité de sortie (D14b, D15b),
**caractérisé par le fait que** le moteur (M14, M15) est un moteur pas à pas (M14, M15) et que l'unité de surveillance (18) est configurée pour déterminer qu'il se produit une anomalie relative à la bande de fibres (F) lorsque l'amplitude du couple de charge est égale ou inférieure à un premier seuil, et pour déterminer qu'il se produit une anomalie relative aux paires de rouleaux (14 , 15, 16, 17) au cas où l'amplitude du couple de charge est inférieure à un deuxième seuil établi sur base de l'amplitude du couple de charge au moment où la bande de fibre (F) n'est pas étirée.

2. Dispositif d'étirage (6) pour machines textiles, comprenant:
une pluralité de paires de rouleaux (14, 15, 16, 17) configurées pour étirer une bande de fibres (F), chacune des paires de rouleaux (14, 15, 16, 17) comportant un rouleau d'entraînement (14a, 15a, 16a, 17a) et un rouleau entraîné (14b, 15b, 16b, 17b) configuré pour tourner avec la rotation du rouleau d'entraînement (14a, 15a, 16a, 17a), et un système de surveillance de charge comprenant:
un moteur (M14, M15) configuré pour faire tourner le rouleau d'entraînement (14a, 15a) d'au moins une des paires de rouleaux (14, 15, 16, 17),
un pilote de moteur (D14, D15) configuré pour commander le fonctionnement du moteur (M14, M15),
un détecteur de courant/tension (T14, T15) configuré pour détecter l'amplitude du courant d'entraînement ou de la tension d'entraînement appliquée au moteur (M14, M15), et
une unité de surveillance (18) configurée pour surveiller le couple de charge agissant sur le moteur (M14, M15),
dans lequel
le pilote de moteur (D14, D15) comporte:
un détecteur de charge (141, 151) configuré pour détecter une valeur correspondant à l'amplitude du couple de charge agissant sur le moteur (M14, M15); et
un moyen de réglage (142, 152) configuré pour ajuster l'amplitude du courant d'entraînement ou de la tension d'entraînement appliqué au moteur (M14, M15), selon l'amplitude du couple de charge détecté par le détecteur de charge (141, 151),
le détecteur de courant/tension (T14, T15) est configuré pour détecter l'amplitude du courant d'entraînement ou de la tension d'entraînement ajusté par le moyen de réglage (142, 152),
dans lequel
l'unité de surveillance (18) est configurée pour surveiller le couple de charge sur base d'un résultat de détection par le détecteur de courant/tension (T14, T15),
**caractérisé par le fait que** le moteur (M14, M15) est un moteur pas à pas (M14, M15) et que l'unité de surveillance (18) est configurée pour déterminer qu'il se produit une anomalie relative à la bande de fibres (F) lorsque l'amplitude du couple de charge est égale ou inférieure à un premier seuil, et pour déterminer qu'il se produit l'anomalie relative aux paires de rouleaux (14, 15, 16, 17) au cas où l'amplitude du couple de charge est inférieure à un deuxième seuil établi sur base de l'amplitude du couple de charge au moment où la bande de fibre (F) n'est pas étirée.

3. Dispositif d'étirage (6) pour machines textiles selon la revendication 1 ou 2, comprenant par ailleurs une mémoire (18a) configurée pour mémoriser l'amplitude du couple de charge,
dans lequel
l'unité de surveillance (18) est configurée pour déterminer s'il se produit au moins une parmi l'anomalie relative aux paires de rouleaux (14, 15, 16, 17) et/ou une anomalie relative à la bande de fibres (F), sur base de l'amplitude du couple de charge mémorisé dans la mémoire (18a) pendant l'étirage de la bande de fibres (F), après que soit arrêté l'étirage.

4. Dispositif d'étirage (6) pour machines textiles selon la revendication 1 ou 2, dans lequel l'unité de surveillance (18) est configurée pour déterminer s'il se produit au moins une parmi l'anomalie relative aux paires de rouleaux (14, 15, 16, 17) et une anomalie relative à la bande de fibres (F), sur base de l'amplitude du couple de charge, pendant l'étirage de la bande de fibres (F).

5. Dispositif d'étirage (6) pour machines textiles selon la revendication 1 ou 2, dans lequel le premier seuil est établi sur base de l'amplitude du couple de charge au moment où la bande de fibres (F) est étirée normalement.

6. Dispositif d'étirage (6) pour machines textiles selon la revendication 1 ou 2, comprenant par ailleurs une unité de réception (5a) configurée pour recevoir l'établissement d'une condition d'étirage pour la bande de fibres (F),
dans lequel
le premier seuil est établi sur base de la condition d'étirage reçue par l'unité de réception (5a).

7. Dispositif d'étirage (6) pour machines textiles selon l'une quelconque des revendications 1 à 6, dans lequel l'unité de surveillance (18) est une unité de commande configurée pour commander le fonctionnement du moteur d'entraînement (D14, D15).

8. Dispositif d'étirage (6) pour machines textiles selon l'une quelconque des revendications 1 à 7, dans lequel le dispositif de réglage (142, 152) est configuré pour régler l'amplitude du courant d'entraînement ou de la tension d'entraînement dans une plage dans laquelle la vitesse de rotation du moteur pas à pas (M14, M 15) est constante avant et après le réglage.

9. Unité de filage (2), comprenant:
le dispositif d'étirage (6) selon l'une quelconque des revendications 1 à 8,
un dispositif de filage (7) configuré pour tordre la bande de fibres (F) pour générer du fil (Y),
un dispositif d'enroulement (13) configuré pour enrouler le fil (Y) pour former un paquet (P), et
un dispositif de surveillance du fil (8) configuré pour surveiller le fil (Y) .

10. Unité de filage (2) selon la revendication 9, dans laquelle
le dispositif d'étirage (6) comporte une mémoire (18a) configurée pour mémoriser l'amplitude du couple de charge, et
lorsque le dispositif de surveillance du fil (8) détecte une anomalie dans le fil (Y), l'unité de surveillance (18) est configurée pour déterminer s'il se produit au moins une anomalie relative aux paires de rouleaux (14, 15, 16, 17) et une anomalie relative à la bande de fibres (F), sur base de l'amplitude du couple de charge mémorisé dans la mémoire (18a) pendant l'étirage de la bande de fibres (F), après que soit arrêté l'étirage.

11. Unité de filage (2) selon la revendication 10, dans laquelle
l'unité de surveillance (18) est configurée pour déterminer que la bande de fibres (F) n'est pas alimentée vers les paires de rouleaux (14, 15, 16, 17) lorsque l'amplitude du couple de charge est égale ou inférieure à un troisième seuil, et
l'unité de surveillance (18) peut être configurée pour déterminer qu'il se produit une rupture de fil dans le fil (Y) lorsque l'amplitude du couple de charge est supérieure au troisième seuil.

12. Métier à filer comprenant une pluralité d'unités de filage (2) selon l'une quelconque des revendications 9 à 11, dans lequel
les paires de rouleaux (14, 15, 16, 17) comportent une paire de rouleaux arrière (14, 15), une paire de rouleaux centraux (16) et une paire de rouleaux avant (17), dans l'ordre à partir d'un côté amont dans une direction de déplacement de la bande de fibres (F), et
le moteur pas à pas (M14, M15) configuré pour faire tourner le rouleau d'entraînement (14a, 15a) de la paire de rouleaux arrière (14, 15) est disposé dans chacune des unités de filage (2).
